# EUROPÄISCHE PATENTANMELDUNG

(11) **EP 0 775 909 A1**
(43) Veröffentlichungstag der Anmeldung: **28.05.1997**
(21) Anmeldenummer: 96116378.9
(22) Anmeldetag: 12.10.1996
(51) Int. Cl.: G01N 27/26

(54) **Verfahren zur Messung von kondensierter Feuchtigkeit sowie Vorrichtung zur Durchführung des Verfahrens und dessen Verwendung**

(30) Priorität: 24.11.1995 DE 19543770
(71) Anmelder: METALLGESELLSCHAFT AG, 60323 Frankfurt am Main (DE)
(72) Erfinder: Kalfa, Horst, Dr., 65510 Idstein (DE); Schroeder, Knut, 60431 Frankfurt am Main (DE)

(57) **Zusammenfassung**

Kondensierte Feuchtigkeit in Vorrichtungen und/oder Rohrleitungen der chemischen Technik wird gemessen, indem an mindestens einer Stelle in der Vorrichtung und/oder Rohrleitung die Differenz der elektrochemischen Potentiale mit Hilfe einer Meßvorrichtung zwischen mindestens zwei Elementen gemessen wird, welche aus Werkstoffen mit unterschiedlichem elektrochemischen Potential bestehen und welche nebeneinander und elektrisch voneinander isoliert angeordnet sind.

## Beschreibung

Die Erfindung bezieht sich auf ein Verfahren zur Messung von kondensierter Feuchtigkeit in Vorrichtungen und/oder Rohrleitungen der chemischen Technik sowie auf eine Vorrichtung zur Durchführung des Verfahrens und auf dessen Verwendung.

Für Teile und Komponenten in technischen Anlagen wird als Werkstoff oft Kohlenstoffstahl verwendet, dessen Oberfläche beim Kontakt mit einer Phase, die kondensierte Feuchtigkeit enthält, durch Korrosion angegriffen wird. Unter dem Ausdruck "Phase" sind hier alle Medien zu verstehen, die Feuchtigkeit enthalten können. Dies sind beispielsweise Gase, Dämpfe, Stäube oder pulverförmige Stoffe. Das in der Phase enthaltene Wasser oder eine wäßrige Lösung ohne Berücksichtigung des Aggregatzustands wird hier mit dem Begriff "Feuchtigkeit" bezeichnet und dessen relative Masse "Feuchtigkeitsgehalt" genannt. Mit dem Begriff "Korrosion" ist die von der Oberfläche ausgehende, durch unbeabsichtigten chemischen oder elektrochemischen Angriff hervorgerufene schädliche Veränderung des Werkstoffs gemeint. Als Schutz vor Korrosion kann der Kohlenstoffstahl durch Überzüge, Schutzschichten oder Folien mechanisch von einer Feuchtigkeit enthaltenden Phase getrennt werden oder es können korrosionsbeständige Werkstoffe verwendet werden. Diese Maßnahmen sind jedoch mit einem größeren Aufwand und höheren Kosten verbunden und wirtschaftlich meist nicht vertretbar. Vielmehr wird versucht, technische Anlagen so auszulegen und zu betreiben, daß eine Kondensation der Feuchtigkeit durch einen genügenden thermischen Abstand von deren Taupunkt vermieden wird. Der Ausdruck "Taupunkt" bedeutet hier die Temperatur, bei der die Verflüssigung der Feuchtigkeit bei dem herrschenden Partialdruck, daß heißt, der dem Feuchtigkeitsgehalt entsprechende Dampfdruck, eintritt.

Eine Korrosion kann in Anlagen bzw. Rohrleitungen der chemischen Technik nicht immer verhindert werden. Unter dem Begriff "Anlagen der chemische Technik" sind hier alle in der chemischen Technologie und verwandter Bereiche verwendeten Anlagen, zum Beispiel auch Anlagen der mechanischen Verfahrenstechnik, zu verstehen, wo sich Probleme mit Korrosion, beispielsweise an Kohlenstoffstahl, insbesondere durch wechselnde Betriebsbedingungen und durch Veränderungen der mit Kohlenstoffstahl in Kontakt kommenden Phasen ergeben können. Dies sind zum Beispiel Anlagen in der Stahlindustrie, Baustoffindustrie, chemischen Industrie, Eisen-, Nichteisenmetall- und Glashüttenindustrie, Zellstoffindustrie sowie der Brennstoff- und Energietechnik, denn wechselnde Betriebsbedingungen und die Veränderungen der Phasen im laufenden Betrieb sind hier oft nicht hinreichend genau zu bestimmen. Beispielsweise kann in Anlagen zur Reinigung von staubbeladenen Abgasen durch hygroskopisches Verhalten dieser Stäube und durch Adsorption bzw. Absorption von Feuchtigkeit eine Phase entstehen, die kondensierte Feuchtigkeit enthält, wobei deren Auftreten von einer Vielzahl von Parametern abhängig ist und schwer vorhersagbar ist. Daher ist es notwendig, ein Auftreten der kondensierten Feuchtigkeit in diesen Phasen zu messen, um durch eine entsprechende Steuerung des Betriebs der technischen Anlagen den Feuchtigkeitsgehalt zu reduzieren und eine erneute Kondensation zu vermeiden. Dabei besteht das Problem, das diese Phasen auch sehr hohe Staubbeladungen beliebiger Zusammensetzung enthalten können. Insbesondere können an den Wandungen von technischen Anlagen, die besonders korrosionsgefährdet sind, Staubablagerungen vorhanden sein. Darüber hinaus besteht das Problem, daß in bestimmten technischen Anlagen eine direkte Messung von kondensierter Feuchtigkeit in einem Festbett nötig ist.

Zur Messung von Feuchtigkeit in Gasen werden im wesentlichen Hygrometer als Haar-, Leitfähigkeits-, Elektrolyse-, Diffusionshygrometer und Psychrometer verwendet. Die Hygrometer weisen den Nachteil auf, daß sie sehr empfindlich gegen Verschmutzung sind oder daß eine Messung durch chemische Reaktionen der Analysesubstanz mit dem Gas nicht möglich ist. Bei Flüssigkeiten und Feststoffen kann die Feuchtigkeit durch Trocknen bzw. mit Hilfe physikalischer Meßmethoden durch Leitfähigkeitsmessungen, thermogravimetrische Messung, Infrarotabsorption und durch Bestimmung mit schnellen Neutronen erfolgen. Darüber hinaus sind chemische Verfahren gebräuchlich. Diese Verfahren sind relativ aufwendig und werden meist nur zu Analysezwecken eingesetzt. Für eine Messung von Feuchtigkeit in Anlagen der chemischen Technik sind die aufgeführten Meßmethoden alle nicht geeignet.

Es ist die Aufgabe der vorliegenden Erfindung, ein Verfahren bereitzustellen, mit dem kondensierte Feuchtigkeit in Vorrichtungen und Rohrleitungen der chemischen Technik gemessen werden kann. Ferner sollte dieses Verfahren technisch einfach zu realisieren sein und gut in ein bestehendes System zum Betreiben und zur Steuerung einer Anlage integriert werden können.

Die Aufgabe wird durch ein Verfahren gelöst, bei dem an mindestens einer Stelle in der Vorrichtung und/oder Rohrleitung die Differenz der elektrochemischen Potentiale mit Hilfe einer Meßvorrichtung zwischen mindestens zwei Elementen gemessen wird, welche aus Werkstoffen mit unterschiedlichem elektrochemischen Potential bestehen und welche nebeneinander und elektrisch voneinander isoliert angeordnet sind.

Die Messung der Feuchtigkeit beruht auf dem Prinzip der elektrolytischen Polarisation infolge ungleicher Polarisationsspannungen, die sich beim Vorhandensein eines Elektrolyten zwischen den Elementen mit unterschiedlichem elektrochemischen Potential einstellt. Enthält die Phase zwischen den Elementen kondensierte Feuchtigkeit, so wirkt sie als Elektrolyt und es stellt sich eine elektrische Spannung zwischen den Elementen mit unterschiedlichem elektrochemischen Potential ein. Die Höhe dieser elektrischen Spannung hängt vom Unterschied in den elektrochemischen Potentialen, von der Zusammensetzung der Phase, von der Temperatur und dem Ohmschen Widerstand zwischen den Elementen ab. Als Werkstoffe für diese Elemente können zum Beispiel elektrisch leitfähigen Materialen, beispielsweise Metalle, Metallegierungen, keramische Werkstoffe wie Siliciumcarbid und Graphit, verwendet werden. Die äußere Formgebung der Elemente ist daher dem jeweiligen Einsatzzweck anzupassen. Es können beispielsweise Elemente mit einem rechteckigen oder halbrunden Querschnitt verwendet werden. Die Elemente werden nebeneinander angeordnet, wobei sie elektrisch voneinander isoliert werden, was beispielsweise durch eine Anordnung der Elemente an einem gemeinsamen Träger aus einem elektrisch isolierenden Werkstoff erfolgen kann. Die Differenz der elektrochemischen Potentiale der Elemente kann beispielsweise mit Hilfe eines hochohmigen Spannungsmeßgeräts gemessen werden. Das hochohmige Spannungsmeßgerät sollte möglichst einen Innenwiderstand größer 10¹² Ohm besitzen. Dies hat den Vorteil, daß das Meßsignal direkt ausgewertet und zur Überwachung und/oder Steuerung in das System zum Betreiben der technischen Anlage eingebunden werden kann. Die gemessene elektrische Spannung kann als "Online-Signal" dienen, daß bedeutet, der Betrieb der technischen Anlage wird bei einer Änderung des Signals entsprechend geregelt. Der Eingriff in den Betrieb bzw. die Regelung ist abhängig vom Temperatur- und Feuchtigkeitsverlauf in der technischen Anlage. Bei Anwesenheit von kondensierter Feuchtigkeit wird zum Beispiel die Temperatur in der Anlage bzw. Rohrleitung erhöht und/oder der Eintrag von Feuchtigkeit vermindert, damit ein ausreichender thermischer Abstand zum Taupunkt der Feuchtigkeit gegeben ist. Dies kann beispielsweise durch Regelung einer Heizvorrichtung und/oder Kühlvorrichtung erfolgen. Bei einem Reaktor mit Eindüsung von Feuchtigkeit kann durch eine Steuerung der eingedüsten Feuchtigkeitsmenge die Temperatur beeinflußt werden. Auch durch die Verwendung von in der Anlage zu verarbeitenden Materialien mit unterschiedlichem Feuchtigkeitsgehalt kann eine Regelung des Feuchtigkeitsgehalts erfolgen. Enthält die Phase zwischen den Elementen keine kondensierte Feuchtigkeit, daß heißt, ist ihr Gehalt an kondensierter Feuchtigkeit kleiner ca. 1 %, so stellt sich keine elektrische Spannung zwischen den unterschiedlichen Elementen ein und in den Betrieb der technischen Anlage wird nicht eingegriffen. So können Korrosionen an nicht korrosionsbeständigen Werkstoffen in technischen Anlagen und Rohrleitungen, insbesondere an Kohlenstoffstahl, bei Temperaturen kleiner ca. 200 °C durch kondensierte Feuchtigkeit relativ sicher vermieden werden. Mit Hilfe des erfindungsgemäßen Verfahrens kann auch eine quantitative Bestimmung des Gehalts an kondensierter Feuchtigkeit durchgeführt werden. Dazu werden Vergleichskurven aufgenommen, die den Signalverlauf von der Messung der Differenz der elektrochemischen Potentiale bei verschiedenen Gehalten an kondensierter Feuchtigkeit und bei verschiedenen Temperaturen zeigen. Durch Vergleich der aktuellen Meßwerte mit diesen Vergleichskurven wird so der aktuelle Gehalt an kondensierter Feuchtigkeit bestimmt und die technische Anlage wird derart gesteuert, daß sich der gewünschte Gehalt an kondensierter Restfeuchtigkeit einstellt.

In weiterer Ausgestaltung der Erfindung ist es vorgesehen, daß die Differenz der elektrochemischen Potentiale zwischen mindestens zwei Elementen gemessen wird, die aus unterschiedlichen Metallen oder Metallegierungen bestehen. Die Werkstoffe für diese Elemente werden so gewählt, daß sie neben einem ausreichenden Unterschied in ihrem elektrochemischen Potential auch eine relativ hohe chemische Beständigkeit gegenüber dem umgebenden Medium aufweisen, um eine ausreichende Lebensdauer des Sensors zu erzielen.

In weiterer Ausgestaltung der Erfindung ist es vorgesehen, daß die Differenz der elektrochemischen Potentiale zwischen zwei Elementen gemessen wird, die aus Eisen und Kupfer oder Titan und Zirkonium bestehen. Die Werkstoffe Eisen und Kupfer sind relativ preisgünstig und einfach zu bearbeiten und weisen für viele Anwendungsfälle einen genügend hohen Widerstand gegen Korrosion auf. Für stark korrosive Phasen, beispielsweise Phasen mit kondensierter Salzsäure, werden die Werkstoffe Titan und Zirkonium aufgrund ihres relativ hohen Korrosionswiderstands bevorzugt eingesetzt, damit eine ausreichend lange Lebensdauer der Elemente gewährleistet ist.

In weiterer Ausgestaltung der Erfindung ist es vorgesehen, daß an mindestens einem Element die Temperatur gemessen wird. Die Messung der Temperatur ist vorteilhaft, da die Höhe der elektrischen Spannung zwischen den Elementen mit unterschiedlichen elektrochemischen Potentialen auch von der Temperatur abhängt. Eine Temperaturmessung ist insbesondere dann vorteilhaft, wenn mit Hilfe des erfindungsgenmäßen Verfahrens eine quantitative Bestimmung des Gehalts an kondensierter Feuchtigkeit erfolgen soll.

In weiterer Ausgestaltung der Erfindung ist es vorgesehen, daß die Differenz der elektrochemischen Potentiale der Elemente über ein abgeschirmtes Kabel zur Meßvorrichtung geleitet wird, daß zuerst Hochspannungsüberschläge gefiltert werden und danach die Differenz der elektrochemischen Potentiale zur Anpassung an den Regelungskreis der technischen Anlage umgewandelt wird. Dieses Verfahren ist insbesondere zur Messung von kondensierter Feuchtigkeit in Hochspannungsanlagen, beispielsweise in Elektrofiltern, vorteilhaft einsetzbar. Als Filtervorrichtung für die Hochspannungsüberschläge kann beispielsweise ein Hochspannungsschutz mit relativ schnellen Ansprechzeiten, welcher zum Personen- und Geräteschutz eingesetzt wird, verwendet werden. Die resultierenden Spannungssignale werden in Ströme von 4 bis 20 mA umgewandelt, die in den Regelungskreis der technischen Anlage eingespeist werden können.

In weiterer Ausgestaltung der Erfindung ist es vorgesehen, daß das erfindungsgemäße Verfahren mit Hilfe einer Vorrichtung durchgeführt wird, die mindestens zwei Elemente enthält, welche durch ein elektrisch isolierendes Material voneinander getrennt werden, wobei der Abstand zwischen den Elementen 0,001 bis 1 mm beträgt und wobei die Elemente aus Werkstoffen mit unterschiedlichem elektrochemischen Potential bestehen und nebeneinander und elektrisch voneinander isoliert angeordnet sind. Als elektrisch isolierendes Material kann beispielsweise ein elektrisch isolierender Kunststoff verwendet werden. Für einen Einsatz bei höheren Temperaturen ist beispielsweise Polytetrafluoräthylen (PTFE) sehr gut geeignet. Die Elemente werden in der technischen Anlage bzw. Rohrleitung zum Beispiel so angeordnet, daß die Elemente in deren Wandung sitzen oder daß die Spitzen der Elemente in den Innenraum der Wandung hineinragen oder mit der Fläche dieser Wandung bündig abschließen.

In weiterer Ausgestaltung der Erfindung ist es vorgesehen, daß die Vorrichtung mindestens zwei Elemente enthält, welche aus Werkstoffen mit unterschiedlichem elektrochemischen Potential bestehen und an einem Träger angeordnet sind, wobei der Träger innerhalb eines ersten zylindrischen Rohrstücks angeordnet ist, wobei das erste zylindrische Rohrstück kraft- und formschlüssig mit dem zweiten zylindrischen Rohrstück verbunden ist, wobei das zweite zylindrische Rohrstück an einer Wand einer technischen Anlage so angebracht wird, daß die Spitzen der zwei Elemente durch eine in dieser Wand angebrachten Bohrung in den Innenraum der technischen Anlage hineinragen oder mit der Fläche dieser Wand bündig abschließen. Die kraft- und formschlüssige Verbindung kann beispielsweise durch eine Schraubverbindung erfolgen, wobei das erste zylindrische Rohrstück mit einem Außengewinde versehen ist und in ein mit einem passenden Innengewinde versehenes zweites zylindrisches Rohrstück eingeschraubt wird. Es ist der Vorteil dieser Vorrichtung zur Messung von kondensierter Feuchtigkeit, daß sie auch nachträglich, daß bedeutet nach dem Aufbau der technischen Anlage, darin eingebaut werden kann. Auch ein Austausch dieser Vorrichtung ist sehr einfach möglich. Ein oder mehrere dieser Vorrichtungen werden an den Stellen in die Anlage eingebaut, die am stärksten von Korrosion durch kondensierte Feuchtigkeit gefährdet sind.

In weiterer Ausgestaltung der Erfindung ist es vorgesehen, daß das Verfahren und die Vorrichtung zur Überwachung und/oder Steuerung von Feuchtigkeit in einer Anlage zur Trocknung verwendet wird. Das Verfahren ist beispielsweise für Anlagen zur Trocknung von Kohle, Klärschlamm oder Müll bzw. Sondermüll sehr gut geeignet. In derartigen Anlagen ist es von besonderem Vorteil, daß die Messung der Feuchtigkeit auch direkt im Festbett der Trocknungsvorrichtung erfolgen kann. Da der Restfeuchtegehalt quantitativ bestimmt werden kann, ist es möglich, die Trocknungsvorrichtung mit Hilfe des erfindungsgemäßen Vefahrens zu steuern und damit den gewünschten Restfeuchtegehalt des Produkts einzustellen.

In weiterer Ausgestaltung der Erfindung ist es vorgesehen, daß das Verfahren und die Vorrichtung zur Überwachung und/oder Steuerung von Feuchtigkeit in einer Anlage zum Reinigen von Abgasen verwendet wird. Die Anlage kann beispielsweise ein Elektrofilter oder Schlauchfilter sein. Der besondere Vorteil des erfindungsgemäßen Verfahrens liegt hier darin, daß die Feuchtigkeit des Rohgases auch unter beliebig hoher Staubbelastung und bei variabler Zusammensetzung gemessen werden kann.

In weiterer Ausgestaltung der Erfindung ist es vorgesehen, daß das Verfahren und die Vorrichtung zur Überwachung und/oder Steuerung von Feuchtigkeit in einer Trockenentschwefelungsanlage mit zirkulierender Wirbelschicht verwendet wird. Hier ist es vorteilhaft, daß der Feuchtigkeitsgehalt direkt im Wirbelbett gemessen werden kann.

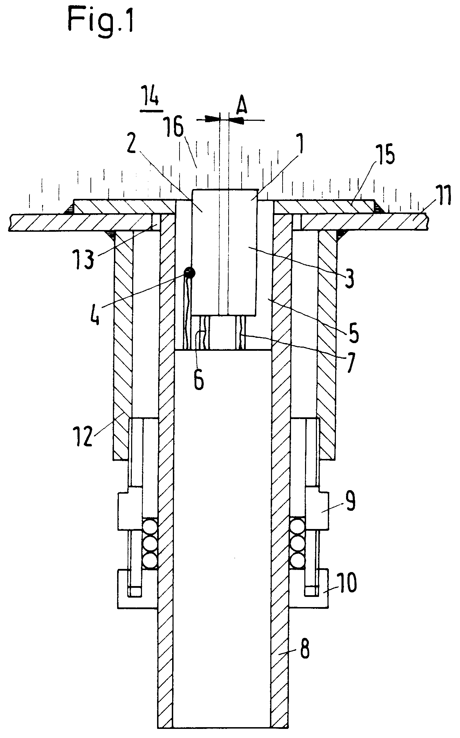

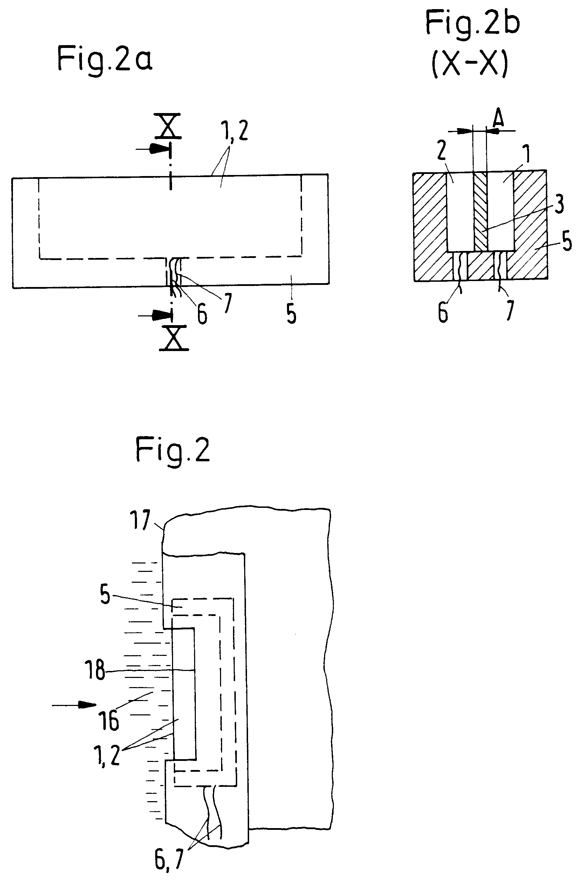

Die Erfindung wird nun anhand von zwei Ausführungsbeispielen und durch zwei Zeichnungen (Fig. 1 und Fig. 2) näher erläutert.

In Fig. 1 ist eine Vorrichtung zur Messung von Feuchtigkeit an einer Apparatewand dargestellt.

In Fig. 2 ist eine Vorrichtung zur Messung von Feuchtigkeit in einem Elektrofilter dargestellt.

### Beispiel 1:

Es wird die Messung von kondensierter Feuchtigkeit an einer Apparatewand beispielhaft beschrieben.

Die Vorrichtung für diese Messung ist in Fig. 1 dargestellt. Sie besteht aus zwei Elementen (1, 2), die durch einen elektrisch nicht leitenden Kunststoff (3), beispielsweise Polytetrafluoräthylen (PTFE), mit einem Abstand (A) von 0,2 bis 0,5 mm voneinander getrennt sind. Das Element (1) besteht aus Eisen und das Element (2) ist aus Kupfer gefertigt. Am Element (2) ist zusätzlich eine Meßvorrichtung (4) zur Ermittlung der Temperatur angeordnet. Die Elemente (1, 2) sind an einem Träger (5) angeordnet, der mit Bohrungen für die an den Elementen (1, 2) angebrachten elektrischen Anschlußleitungen (6, 7) versehen ist, über die das Meßsignal zur weiteren Signalverarbeitung geführt wird. Der Träger (5) ist innerhalb eines zylindrischen Rohrstücks (8) angeordnet, welches durch die Stopfbuchsen (9, 10) über ein Gewinde mit einem an der Apparatewand (11) angebrachten Rohrstück (12) verbunden ist. Das Rohrstück (12) ist axial an einer Bohrung (13) in der Apparatewand (11) angeordnet, so daß die Spitzen der Elemente (1, 2) um wenige mm in den Apparateinnenraum (14) hineinragen. Zur Abdichtung des Apparateinnenraums (14) ist zusätzlich eine Dichtblende (15) an der Innenfläche der Apparatewand (11) angebracht.

Die kondensierte Feuchtigkeit wird durch Messung der Differenz der elektrochemischen Potentiale der zwei Elemente (1, 2) ermittelt. Enthält die Phase (16) an der Apparatewand (11) kondensierte Feuchtigkeit, so stellt sich zwischen den Elementen (1) und (2) eine elektrische Spannung ein. Das Spannungssignal wird in ein mA-Signal von 4 bis 20 mA umgewandelt. Das mA-Signal wird direkt in das Leitsystem der technichen Anlage eingebunden. Zur Verringerung der Feuchtigkeit an der Apparatewand wird beispielsweise die Temperatur im Apparat erhöht.

### Beispiel 2:

Es wird die Messung von kondensierter Feuchtigkeit in einem Elektrofilter beispielhaft beschrieben.

Die Vorrichtung für diese Messung ist in Fig. 2 dargestellt. Die Fig. 2a und Fig. 2b zeigen die Vorrichtung im Längsschnitt und im Querschnitt . In der Fig. 2c ist der Einbau der Vorrichtung im Elektrofilter dargestellt. Die Vorrichtung besteht aus zwei Elementen (1, 2), die durch einen elektrisch nicht leitenden Kunststoff (3), beispielsweise Polytetrafluoräthylen (PTFE), mit einem Abstand (A) von 0,2 bis 0,5 mm voneinander getrennt sind. Das Element (1) besteht aus Eisen und das Element (2) ist aus Kupfer gefertigt. Die Elemente (1, 2) sind an einem Träger (5) angeordnet und mit elekrischen Anschlußleitungen (6, 7) versehen, über die das Meßsignal zur weiteren Signalverarbeitung geführt wird. Der Träger (5) ist im Elektrofilter an einer Niederschlagselektrode (17), die mit einer Aussparung (18) versehen ist, mittels einer Klemmverbindung durch Umbiegen des Elektrodenblechs befestigt.

Zur Messung von kondensierter Feuchtigkeit wird die Differenz der elektrochemischen Potentiale der zwei Elemente (1, 2) ermittelt, die an einer Elektrode (17) angeordnet sind, welche in Pfeilrichtung von einem zu reinigenden Gas durchströmt wird. Enthält die Phase (16) kondensierte Feuchtigkeit, so stellt sich zwischen den Elementen (1) und (2) eine elektrische Spannung ein. Das Spannungssignal wird über die elektrischen Anschlußleitungen (6, 7) zur weiteren Signlverarbeitung geleitet und danach in das Leitsystem der technichen Anlage eingebunden. Zur Verringerung der Feuchtigkeit wird beispielsweise die Temperatur des zu reinigenden Gases erhöht.

## Patentansprüche

1. Verfahren zur Messung von kondensierter Feuchtigkeit in Vorrichtungen und/oder Rohrleitungen der chemischen Technik, dadurch gekennzeichnet, daß an mindestens einer Stelle in der Vorrichtung und/oder Rohrleitung die Differenz der elektrochemischen Potentiale mit Hilfe einer Meßvorrichtung zwischen mindestens zwei Elementen (1, 2) gemessen wird, welche aus Werkstoffen mit unterschiedlichem elektrochemischen Potential bestehen und welche nebeneinander und elektrisch voneinander isoliert angeordnet sind.

2. Verfahren nach Anspruch 1, dadurch gekennzeichnet, daß die Differenz der elektrochemischen Potentiale zwischen mindestens zwei Elementen (1, 2) gemessen wird, die aus unterschiedlichen Metallen oder Metallegierungen bestehen.

3. Verfahren nach Anspruch 2, dadurch gekennzeichnet, daß die Differenz der elektrochemischen Potentiale zwischen zwei Elementen (1, 2) gemessen wird, die aus Eisen und Kupfer oder Titan und Zirkonium bestehen.

4. Verfahren nach einem der Ansprüche 1 bis 3, dadurch gekennzeichnet, daß an mindestens einem Element die Temperatur gemessen wird.

5. Verfahren nach einem der Ansprüche 1 bis 4, dadurch gekennzeichnet, daß die Differenz der elektrochemischen Potentiale der Elemente (1, 2) über ein abgeschirmtes Kabel zur Meßvorrichtung geleitet wird, daß zuerst Hochspannungsüberschläge gefiltert werden und danach die Differenz der elektrochemischen Potentiale zur Anpassung an den Regelungskreis der technischen Anlage umgewandelt wird.

6. Vorrichtung zur Durchführung des Verfahrens nach einem der Ansprüche 1 bis 5, dadurch gekennzeichnet, daß sie mindestens zwei Elemente (1, 2) enthält, welche durch ein elektrisch isolierendes Material (3) voneinander getrennt werden, wobei der Abstand (A) zwischen den Elementen (1, 2) 0,001 bis 1 mm beträgt und wobei die Elemente (1, 2) aus Werkstoffen mit unterschiedlichem elektrochemischen Potential bestehen und nebeneinander und elektrisch voneinander isoliert angeordnet sind.

7. Vorrichtung nach Anspruch 6, dadurch gekennzeichnet, daß mindestens zwei Elemente (1, 2), bestehend aus Werkstoffen mit unterschiedlichem elektrochemischen Potential, an einem Träger (5) angeordnet sind, daß der Träger (5) innerhalb eines ersten zylindrischen Rohrstücks (8) angeordnet ist, daß das erste zylindrische Rohrstück kraft- und formschlüssig mit dem zweiten zylindrischen Rohrstück (12) verbunden ist, wobei das zweite zylindrische Rohrstück (8) an einer Wand (11) einer technischen Anlage so angebracht wird, daß die Spitzen der zwei Elemente (1, 2) durch eine in dieser Wand (11) angebrachten Bohrung in den Innenraum der technischen Anlage hineinragen oder mit der Fläche dieser Wand bündig abschließen.

8. Verwendung des Verfahrens und der Vorrichtung nach einem der Ansprüche 1 bis 7 zur Überwachung und/oder Steuerung von Feuchtigkeit in einer Anlage zur Trocknung.

9. Verwendung des Verfahrens und der Vorrichtung nach einem der Ansprüche 1 bis 7 zur Überwachung und/oder Steuerung von Feuchtigkeit in einer Anlage zum Reinigen von Abgasen.

10. Verwendung des Verfahrens und der Vorrichtung nach einem der Ansprüche 1 bis 7 zur Überwachung und/oder Steuerung von Feuchtigkeit in einer Trockenentschwefelungsanlage mit zirkulierender Wirbelschicht.
